# EUROPÄISCHE PATENTSCHRIFT

(11) **EP 2 284 039 B1**
(45) Veröffentlichungstag und Bekanntmachung des Hinweises auf die Patenterteilung: **28.03.2012**
(21) Anmeldenummer: 10006893.1
(22) Anmeldetag: 03.07.2010
(51) Int. Cl.: B60N 2/12

(54) **Fahrzeugsitz, insbesondere Kraftfahrzeugsitz**
Vehicle seat, in particular motor vehicles seat
Siège de véhicule, en particulier siège de véhicule automobile

(30) Priorität: 12.08.2009 DE 102009037816
(43) Veröffentlichungstag der Anmeldung: 16.02.2011
(73) Patentinhaber: KEIPER GmbH & Co. KG, 67657 Kaiserslautern (DE)
(72) Erfinder: Kämmerer, Joachim, 67663 Kaiserslautern (DE)

(56) Entgegenhaltungen:
- EP-A2- 1 535 792
- DE-A1-102006 007 139

## Beschreibung

Die Erfindung betrifft einen Fahrzeugsitz, insbesondere einen Kraftfahrzeugsitz, mit den Merkmalen des Oberbegriffs des Anspruches 1.

Die zweiten und/oder dritten Sitzreihen von Multifunktionsfahrzeugen (MPV), wie beispielsweise Vans oder Großraumlimousinen, sind in der Regel so ausgestaltet, dass der Innenraum variabel auf einen Personen- oder Gütertransport einstellbar ist. Aus der DE 10 2006 007 139 A1 ist beispielsweise ein Fahrzeugsitz der eingangs genannten Art bekannt, der aus einer Gebrauchsstellung in eine zum Einstieg geeignete Stellung oder in eine zusammengeklappte Bodenstellung zur Vergrößerung des Laderaums überführbar ist. In der EP 1 535 792 A2 ist ein ähnlicher Fahrzeugsitz beschrieben, bei welchem die an der Lehne angelenkte Koppel mittels eines Drehschubgelenks an einem hinteren Lenker angekoppelt, welcher am Sitzteil angelenkt ist, das mittels eines Verriegelungsmechanismus verriegelbar ist.

Der Erfindung liegt die Aufgabe zu Grunde, eine Alternative zum Fahrzeugsitz der eingangs genannten Art zu schaffen. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Die Koppel dient bekannterweise dazu, Bewegungen und teilweise auch gesperrte Zustände der Lehne und des Sitzkissens gegenseitig zu übertragen und aufeinander abzustimmen. Indem die Koppel mittels eines ersten Drehschubgelenks an das Kopplungsmittel oder das Sitzkissen angekoppelt ist, wird ein Leerweg zur Verfügung gestellt, welcher eine entkoppelte Bewegung der Koppel (und damit der Lehne) relativ zum Kopplungsmittel und zum Sitzkissen ermöglicht. Damit wird insbesondere eine Neigungseinstellung der Lehne möglich, die das Sitzkissen unbeeinflusst lässt. Für die Funktion der Koppel bezüglich der gesperrten Zustände ist nun die zweite Verriegelungsvorrichtung vorgesehen, welche das Kopplungsmittel lösbar verriegelt, unabhängig vom Verriegelungszustand der Lehne.

Die Bewegung des Sitzkissens und des hinteren Fußes mit der Lehne relativ zum vorderen Fuß wird durch das wenigstens eine Kopplungsmittel gesteuert, so dass vorzugsweise eine Reduktion auf einen einzigen Freiheitsgrad erreicht werden kann. Die Einstiegsstellung kann so mittels einer Ein-Hand-Bedienung erreicht werden. Als Kopplungsmittel ist ein weiteres Drehschubgelenk vorgesehen. Unter einer Anlenkung eines Bauteils an einem anderen Bauteil soll eine direkte gelenkige Verbindung mit genau einem Gelenk zwischen den beiden Bauteilen verstanden werden. Der Begriff "Koppel" soll jeweils eine Anlenkung an wenigstens zwei Enden der Koppel implizieren. Ein Beispiel für ein Drehschubgelenk ist eine "Schlitz-Zapfen-Führung" zwischen zwei Bauteilen, bestehend aus einem Schlitz (Langloch, Kulisse, Nut, Führung) in dem einen Bauteil, in welchen ein Zapfen (Bolzen, Kulissen- oder Nutenstein) des anderen Bauteils greift. Die zwei möglichen Zuordnungen von Schlitz und Zapfen zu den beiden Bauteilen sind vertauschbar und gleichwertig.

Die Versatzbewegung von hinterem Fuß und Lehne enthält - außer translatorischen Komponenten - vorzugsweise eine - durch die Ausgestaltung des wenigstens einen Kopplungsmittels erzeugte - rotatorische Bewegung, so dass die Lehne sich wenigstens aufrichtet, vorzugsweise in der Einstiegsstellung leicht nach vorne geneigt ist. Dies, erleichtert den Einstieg.

In technisch einfacher Ausführung wird das erste Drehschubgelenk durch eine solche Schlitz-Zapfen-Führung gebildet, welche einen Zapfen und einen diesen umschließenden Schlitz aufweist. Der Zapfen kann weitere Funktionen übernehmen, beispielsweise als Teil der zweiten Verriegelungsvorrichtung oder als ein Teil eines zweiten Drehschubgelenks, welches als Kopplungsmittel dient.

Indem die Basis vorzugsweise wenigstens ein Sitzschienenpaar aufweist, kann die Sitzlängsposition fein gestuft, gegebenenfalls nahezu stufenlos, eingestellt werden.

Es können dabei herkömmliche Sitzschienenpaare verwendet werden, bei denen beispielsweise die beiden im wesentlichen U-fönnig profilierten Sitzschienen mit ihren nach innen bzw. nach außen gebogenen Längsrändern einander wechselseitig hintergreifen. Durch die Verwendung von solchen Serienprodukten können die Herstellungskosten des Fahrzeugsitzes verringert werden.

Im folgenden ist die Erfindung anhand eines in der Zeichnung dargestellter Ausführungsbeispiels und einer Studie näher erläutert. Es zeigen
- Fig. 1A: eine schematisierte Seitenansicht des Ausführungsbeispiels in der vor- dersten Gebrauchsstellung,
- Fig. 1B: eine Fig. 1A entsprechende Ansicht des Ausführungsbeispiels in einer hinteren Gebrauchsstellung,
- Fig. 1C: eine Fig. 1A entsprechende Ansicht des Ausführungsbeispiels in der Ein- stiegsstellung,
- Fig. 1D: eine Fig. 1A entsprechende Ansicht des Ausführungsbeispiels in der Bo- denstellung,
- Fig. 2A: eine schematisierte Seitenansicht einer Studie in einer Gebrauchsstel- lung,
- Fig. 2B: eine Fig. 2A entsprechende Ansicht der Studie in der Bodenstellung, und
- Fig. 2C: eine Fig. 2A entsprechende Ansicht der Studie in der Einstiegsstellung.

Ein Fahrzeugsitz 1 für eine vordere, mittlere oder hintere Sitzreihe eines Kraftfahrzeuges, beispielsweise eines Vans, weist ein Sitzkissen 3, eine Lehne 5, welche mittels Beschlägen 7 in ihrer Neigung relativ zum Sitzkissen 3 einstellbar ist, und eine Basis 9, welche mit der Struktur des Kraftfahrzeuges verbunden ist, auf. Bei den nachfolgenden Richtungsangaben wird davon ausgegangen, dass der Fahrzeugsitz 1 in Vorwärtsfahrtrichtung im Kraftfahrzeug angeordnet ist, wobei in einer zur Personenbeförderung geeigneten Gebrauchsstellung des Fahrzeugsitzes 1 sich die Lehne 5 am hinteren Ende des Sitzkissen 3 befindet. Unter dem Begriff Sitzkissen 3 soll die gesamte Baugruppe, bestehend aus einer Struktur und einem bezogenen Polster, verstanden werden. Soweit Bauteile am Sitzkissen 3 angelenkt sind, ist hierunter eine Anlenkung an der Struktur des Sitzkissens 3 zu verstehen.

Im folgenden wird der Einfachheit halber nur die linke Fahrzeugsitzseite des im wesentlichen symmetrischen Fahrzeugsitzes 1 beschrieben, und zwar zunächst in der Gebrauchsstellung.

Die Basis 9 weist (beidseitig) einen vorderen Fuß 11 auf. Der vordere Fuß 11 kann ein Teilbereich der Basis 9, ein fest mit dieser verbundenes Bauteil, ein lösbar mit der Basis 9 verriegelbares Bauteil oder eine Kombination zweier solcher Teile sein. Zwischen dem Sitzkissen 3 und der Basis 9 ist (beidseitig) ein vorderes Bein 13 vorgesehen, welches (mittels eines Gelenks, vorzugsweise eines einfachen Drehgelenks) am vorderen Fuß 11 angelenkt ist (oder anderweitig mittelbar oder unmittelbar gekoppelt). Das vordere Bein 13 ist (mittels eines weiteren Gelenks) am Sitzkissen 3 angelenkt, so dass das Sitzkissen 3 in gelenkiger Verbindung mit dem vorderen Fuß 11 steht. Die Basis 9 weist im Ausführungsbeispiel (beidseitig) ein Sitzschienenpaar auf, welches die Möglichkeit einer Längseinstellung des Fahrzeugsitzes 1 eröffnet, kann aber alternativ als ein einziges, fest mit der Fahrzeugstruktur verbundenes Bauteil ausgebildet oder die Fahrzeugstruktur selbst sein. Die verschiedenen Varianten der Basis 9 können auch zu einem Baukastensystem zusammengefasst sein. Im Falle eines lösbar mit der Basis 9 verbundenen vorderen Fußes 11 ist der Fahrzeugsitz 1 entnehmbar.

An der Basis 9 ist ferner in Fahrtrichtung (beidseitig) hinter dem vorderen Fuß 11 und dem vorderen Bein 13 ein vom vorderen Fuß 11 und vom vorderen Bein 13 gesondert ausgebildeter hinterer Fuß 21 angeordnet. Der hintere Fuß 21 ist mittels einer am hinteren Fuß 21 angebrachten ersten Verriegelungsvorrichtung 23, beispielsweise einem Drehfallenschloss, lösbar mit der Basis 9 verriegelt. Der hintere Fuß 21 ist mittels eines Viergelenks an den vorderen Fuß 11 (oder allgemein an die Basis 9) gekoppelt. Hierzu sind ein erster Lenker 27 und ein zweiter Lenker 29 vorgesehen, welche jeweils einerseits am vorderen Fuß 11 und andererseits am hinteren Fuß 21 angelenkt sind, und zwar jeweils voneinander beabstandet. Das Sitzkissen 3 und der hintere Fuß 21 sind mittels wenigstens eines Kopplungsmittels in einer später genauer beschriebene Weise gekoppelt. Am hinteren Fuß 21 ist auch ein erstes Beschlagteil des Beschlages 7 angebracht, während ein relativ zum ersten Beschlagteil verdrehbares zweites Beschlagteil des Beschlages 7 an der Lehne 5 befestigt ist.

Eine Koppel 30, welche einer Kopplung zwischen Sitzkissen 3 und Lehne 5 dienen soll, ist an einem Ende an der Lehne 5 angelenkt und weist am anderen Ende einen Schlitz 30a auf, welcher - mit einem Leerweg - einen Zapfen 31 umschließt, wodurch eine erstes Drehschubgelenk 32 definiert ist. Der Zapfen 31 ist dem wenigstens einen Kopplungsmittel oder dem Sitzkissen zugeordnet. Die Koppel 30 hat vorzugsweise eine L-Form, um in der Gebrauchsstellung nicht über die dem Insassen zugewandten Flächen von Sitzkissen 3 und Lehne 5 überzustehen. Eine zweite Verriegelungsvorrichtung 33, welche das wenigstens eine Kopplungsmittel zwischen. Sitzkissen 3 und hinterem Fuß 21 lösbar verriegeln soll, weist vorzugsweise eine Klinke 33a auf, welche (vorzugsweise mittels eines Hakenmauls) mit dem Zapfen 31 oder einem weitere Zapfen zusammenwirkt, der entsprechend auch ein Teil der zweiten Verriegelungsvorrichtung 33 ist.

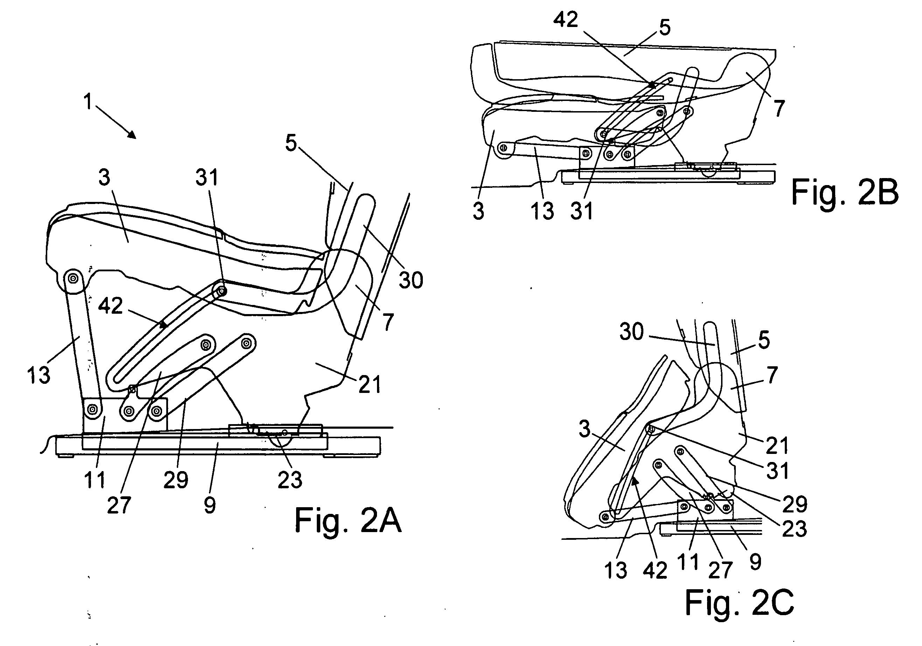

Im Ausführungsbeispiel ist als Kopplungsmittel zwischen Sitzkissen 3 und hinterem Fuß 21 ein zweites Drehschubgelenk 42 vorgesehen, welches vorliegend durch den am Sitzkissen 3 befestigten Zapfen 31 und einen (eine Führungsbahn für den Zapfen 31 definierenden) Schlitz im hinteren Fuß 21 definiert wird. Zudem wirkt der Zapfen 31 als Teil der zweiten Verriegelungsvorrichtung 33 mit deren Klinke 33a zusammen, die am hinteren Fuß 21 angelenkt ist. Die zweite Verriegelungsvorrichtung 33 verriegelt somit den hintere Fuß 21 unmittelbar mit dem Sitzkissen 3, allerdings nicht vollständig, sondern so, dass das (verriegelte) zweite Drehschubgelenk 42 noch als Drehgelenk wirken kann. Zum besseren Verständnis der Wirkung des zweiten Drehschubgelenks 42 ist in den Fig. 2A bis 2C eine Studie ohne erstes Drehschubgelenk 32, d.h. insbesondere ohne Schlitz 30a in der Koppel 30 dargestellt.

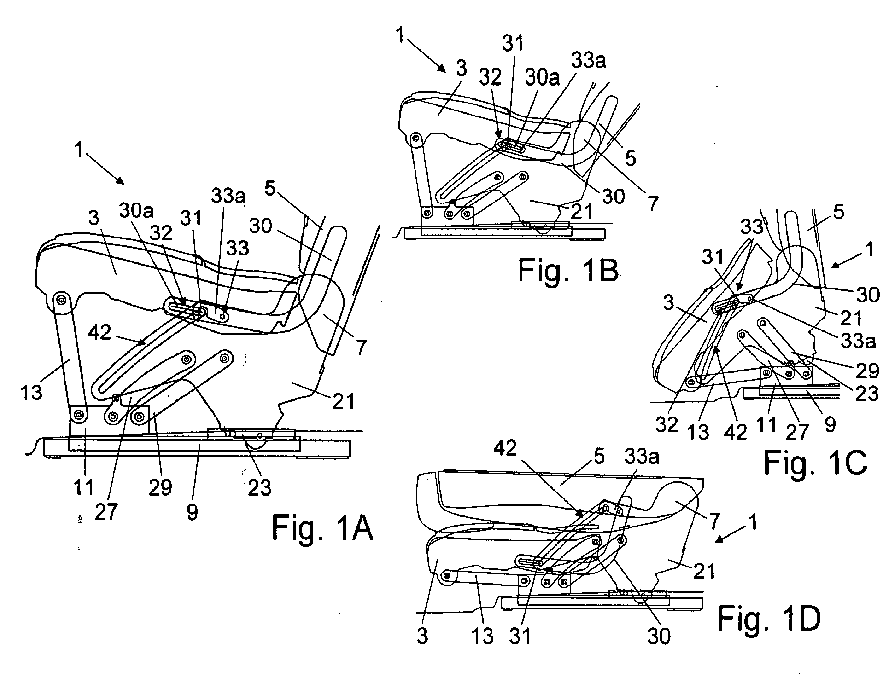

Das erfindungsgemäß vorgesehene erste Drehschubgelenk 32 erlaubt eine - auf den Leerweg - eingeschränkte Bewegung der Koppel 30 relativ zum Sitzkissen 3, d.h. Sitzkissen 3 und Lehne 5 sind - über den durch das erste Drehschubgelenk 32 definierten Leerweg hinweg - entkoppelt. Zur Neigungseinstellung der Lehne 5 wird der Beschlag 7 entriegelt (oder angetrieben) und die Lehne 5 geschwenkt, welche die Koppel 30 bewegt. Die Neigung des Sitzkissens 3 bleibt dabei unbeeinflusst. Der Leerweg, also die Länge des Schlitzes 30a abzüglich des Durchmessers des Zapfens 31, ist auf den Neigungseinstellbereich der Lehne 5 abgestimmt. In der Zeichnung sind eine vordere Gebrauchsstellung (Fig. 1A) und einer hinteren Gebrauchsstellung (Fig. 1B) dargestellt. Die Studie (Fig. 2A) hat nur Gebrauchsstellungen, bei denen eine Neigungsänderung der Lehne 5 eine Neigungsänderung des Sitzkissens 3 erzwingt.

Zum Überführen des Fahrzeugsitzes 1 in eine Einstiegsstellung (Fig. 1C) als eine ausgezeichnete Nichtgebrauchsstellung wird die erste Verriegelungsvorrichtung 23 entriegelt. Die Lehne 5 macht mittels des hinteren Fußes 21 eine Versatzbewegung nach vorne. Die genaue Bahn des hinteren Fußes 21 ist durch die Lenker 27 und 29 definiert, welche den hinteren Fuß 21 samt Lehne 5 während der Versatzbewegung führen. In der Regel ist die Versatzbewegung eine Überlagerung translatorischer und rotatorischer Bewegungen. Das Sitzkissen 3 schwenkt mittels des vorderen Beins 13 und des wenigstens einen Kopplungsmittels zum hinteren Fuß 21 (verriegeltes hinteres Bein 41 oder verriegeltes Drehschubgelenk 42) hoch (und dabei nach vorne), um sich einer aufrechten Stellung zu nähern. Es besteht genau ein Freiheitsgrad für die Kombination der Schwenkbewegung des Sitzkissens 3 mit der Versatzbewegung der Lehne 5. Aufgrund dieses genau einen Freiheitsgrades erfolgt der Übergang, indem wenigstens eines der zu bewegenden Bauteile (beispielsweise das Sitzkissens 3 oder die Lehne 5) des Fahrzeugsitzes 1 manuell und/oder mittels einer Feder (oder gegebenenfalls motorisch) beaufschlagt wird, und dadurch nach vom gedrückt oder gezogen wird. Die Varianten sind gleichwertig; d.h. das Sitzkissen 3 kann beaufschlagt werden und zieht den hinteren Fuß 21 samt Lehne 5 mit, oder die Lehne 5 wird beaufschlagt und drückt mittels des hinteren Fußes 21 das Sitzkissen 3 nach oben.

Mit Erreichen der Einstiegsstellung (Fig. 1C), beispielsweise wenn das vordere Bein 13 an einen Anschlag gelangt, weisen die vormals dem Insassen zugewandten Flächen von Sitzkissen 3 und Lehne 5 wenigstens näherungsweise nach vorne. Sitzkissen 3 und Lehne 5 sind kompakt angeordnet, was den Zugang zu einer hinteren Sitzreihe erleichtert oder den Laderaum vergrößert. Optional können in der Einstiegsstellung zwei relativ zueinander bewegte Teile miteinander verriegeln. Beispielsweise kann die erste Verriegelungsvorrichtung 23 den hinteren Fuß 21 mit dem vorderen Fuß 11 oder mit einem anderen Teil des Basis 9 verriegeln. Es ist auch möglich, dass das Sitzkissen 3 oder die Lehne 5 mit der Basis 9 verriegelt. Bezüglich der Einstiegsstellung gleicht die Studie (Fig. 2C) dem Ausführungsbeispiel (Fig. 1C).

Die Rückkehr in die zuvor eingenommene Gebrauchsstellung erfolgt - gegebenenfalls nach dem Lösen der besagten Verriegelung - in umgekehrter Reihenfolge der beschriebenen Schritte.

Zum Überführen des Fahrzeugsitzes 1 in eine Bodenstellung (Fig. 1D) als eine weitere ausgezeichnete Nichtgebrauchsstellung werden der Beschlag 7 und die zweite Verriegelungsvorrichtung 33 entriegelt. Die Lehne 5 schwenkt nach vorne in eine - wenigstens näherungsweise - horizontale Lage. Dabei wirkt sie mittels der Koppel 30 auf das wenigstens eine Kopplungsmittel zwischen Sitzkissen 3 und hinterem Fuß 21 (entriegeltes hinteres Bein 41 oder entriegeltes zweites Drehschubgelenk 42) ein, d.h. die Koppel 30 drückt den Zapfen 31 nach vorne und unten, wodurch das Sitzkissen 3 - unter Schwenken des vorderen Beins 13 nach vorne - abgesenkt wird. Mit Erreichen der Bodenstellung, beispielsweise wenn die Lehne 5 auf dem Sitzkissen 3 aufliegt oder wenn das vordere Bein 13 an einen Anschlag gelangt, sind die vormals dem Insassen zugewandten Flächen von Sitzkissen 3 und Lehne 5 wenigstens näherungsweise einander zugewandten. Sitzkissen 3 und Lehne 5 sind kompakt angeordnet, was den Laderaum vergrößert. Optional können in der Bodenstellung zwei relativ zueinander bewegte Teile miteinander verriegeln, beispielsweise der Beschlag 7 oder die zweite Verriegelungsvorrichtung 33 mit der Lehne 5.

Bezüglich der Bodenstellung gleicht die Studie (Fig. 2B) dem Ausfiihrungsbeispiel (Fig. 1D).

Die Rückkehr in die zuvor eingenommene Gebrauchsstellung erfolgt - gegebenenfalls nach dem Lösen der besagten Verriegelung - in umgekehrter Reihenfolge der beschriebenen Schritte.

### Bezugszeichenliste

- 1: Fahrzeugsitz
- 3: Sitzkissen
- 5: Lehne
- 7: Beschlag
- 9: Basis
- 11: vorderer Fuß
- 13: vorderes Bein
- 21: hinterer Fuß
- 23: erste Verriegelungsvorrichtung
- 27: erster Lenker
- 29: zweiter Lenker
- 30: Koppel
- 30a: Schlitz
- 31: Zapfen
- 32: erstes Drehschubgelenk
- 33: zweite Verriegelungsvorrichtung
- 33a: Klinke
- 42: zweites Drehschubgelenk

## Patentansprüche

1. Fahrzeugsitz, insbesondere Kraftfahrzeugsitz, mit
a) einer Basis (9), welche wenigstens einen vorderen Fuß (11) aufweist,
b) einem Sitzkissen (3), welches mittels wenigstens eines vorderen Beins (13) in gelenkiger Verbindung mit dem vorderen Fuß (11) steht,
c) wenigstens einem hinteren Fuß (21), welcher in wenigstens einer zur Personenbeförderung geeigneten Gebrauchsstellung mittels einer ersten Verriegelungsvorrichtung (23) mit der Basis (9) verriegelt ist,
d) wenigstens einem Lenker (27, 29) zwischen dem vorderen Fuß (11) und dem hinteren Fuß (21),
e) wenigstens einem Kopplungsmittel zwischen dem Sitzkissen (3) und dem hinteren Fuß (21),
e) einer vom hinteren Fuß (21) getragenen Lehne (5), und
f) wenigstens einer Koppel (30) zwischen der Lehne (5) einerseits und dem wenigstens einen Kopplungsmittel oder dem Sitzkissen (3) andererseits,
wobei
g) der Fahrzeugsitz (1) von der Gebrauchsstellung in eine Einstiegsstellung überführbar ist, indem nach Entriegeln des hinteren Fußes (21) das Sitzkissen (3) hochschwenkt und die Lehne (5) mittels des hinteren Fußes (21), geführt vom Lenker (27, 29), eine Versatzbewegung nach vorne macht, und wobei
h) der Fahrzeugsitz (1) von der Gebrauchsstellung in eine Bodenstellung überführbar ist, indem die Lehne (5) vorschwenkt und mittels der Koppel (30) das Sitzkissen (3) absenkt,
**dadurch gekennzeichnet, dass**
i) die Koppel (30) mittels eines ersten Drehschubgelenks (32) an das wenigstens eine Kopplungsmittel oder das Sitzkissen (3) angekoppelt ist,
j) eine zweite Verriegelungsvorrichtung (33) vorgesehen ist, welche das wenigstens eine Kopplungsmittel lösbar verriegelt, und
k) wenigstens ein zweites Drehschubgelenk (42) als Kopplungsmittel dient.

2. Fahrzeugsitz nach Anspruch 1, **dadurch gekennzeichnet, dass** die Lehne (5) mittels wenigstens eines Beschlags (7) relativ zum hinteren Fuß (21) neigungseinstellbar ist, wodurch mehrere Gebrauchsstellungen definiert sind.

3. Fahrzeugsitz nach Anspruch 2, **dadurch gekennzeichnet, dass** das erste Drehschubgelenk (32) das Sitzkissen (3) und das zweite Drehschubgelenk (42) während der Neigungseinstellung der Lehne (5) von der Koppel (30) entkoppelt.

4. Fahrzeugsitz nach Anspruch 2 oder 3, **dadurch gekennzeichnet, dass** die zweite Verriegelungsvorrichtung (33) in den Gebrauchsstellungen, während der Neigungseinstellung und beim Übergang in die Einstiegsstellung das zweite Drehschubgelenk (42) verriegelt.

5. Fahrzeugsitz nach einem der vorhergehenden Ansprüche, **dadurch gekennzeichnet, dass** das erste Drehschubgelenk (32) beim Übergang in die Einstiegsstellung als Drehgelenk wirkt.

6. Fahrzeugsitz nach einem der vorhergehenden Ansprüche, **dadurch gekennzeichnet, dass** das erste Drehschubgelenk (32) definiert wird durch einen Zapfen (31) und einen Schlitz (30a), insbesondere in der Koppel (30), welcher den Zapfen (31) mit einem Leerweg umschließt.

7. Fahrzeugsitz nach Anspruch 6, **dadurch gekennzeichnet, dass** der Zapfen (31) auch ein Teil der zweiten Verriegelungsvorrichtung (33) ist, insbesondere mit einer Klinke (33a) derselben zusammenwirkt.

8. Fahrzeugsitz nach Anspruch 6 oder 7, **dadurch gekennzeichnet, dass** der Zapfen (31) auch ein Teil des zweiten Drehschubgelenks (42) ist.

9. Fahrzeugsitz nach einem der vorhergehenden Ansprüche, **dadurch gekennzeichnet, dass** beim Übergang in die Bodenstellung die zweite Verriegelungsvorrichtung (33) entriegelt und die Lehne (5) mittels Einwirkung der Koppel (30) auf das zweite Drehschubgelenk (42) das Sitzkissen (3) absenkt.

## Claims

1. Vehicle seat, in particular motor vehicle seat, with
a) a base (9) which has at least one front foot (11),
b) a seat cushion (3) which is in articulated connection to the front foot (11) by means of at least one front leg (13),
c) at least one rear foot (21) which, in at least one use position suitable for conveying individuals, is locked to the base (9) by means of a first locking device (23),
d) at least one link (27, 29) between the front foot (11) and the rear foot (21),
e) at least one coupling means between the seat cushion (3) and the rear foot (21),
f) a backrest (5) which is supported by the rear foot (21), and
g) at least one coupler (30) between the backrest (5), on the one hand, and the at least one coupling means or the seat cushion (3), on the other hand,
wherein
h) the vehicle seat (1) can be transferred from the use position into an entry position by, after release of the rear foot (21), the seat cushion (3) pivoting upwards and the backrest (5) making an offset movement forwards by means of the rear foot (21), guided by the link (27, 29), and wherein
i) the vehicle seat (1) can be transferred from the use position into a flat floor position by the backrest (5) pivoting forwards and, by means of the coupler (30), lowering the seat cushion (3),
**characterized in that**
j) the coupler (30) is coupled to the at least one coupling means or the seat cushion (3) by means of a first turning and sliding joint (32),
k) a second locking device (33) which releasably locks the at least one coupling means is provided, and
l) at least one second turning and sliding joint (42) serves as a coupling means.

2. Vehicle seat according to Claim 1, **characterized in that** the backrest (5) can be adjusted in inclination relative to the rear foot (21) by means of at least one fitting (7), and therefore a plurality of use positions are defined.

3. Vehicle seat according to Claim 2, **characterized in that** the first turning and sliding joint (32) decouples the seat cushion (3) and the second turning and sliding joint (42) from the coupler (30) during the inclination adjustment of the backrest (5).

4. Vehicle seat according to Claim 2 or 3, **characterized in that** the second locking device (33) locks the second turning and sliding joint (42) in the use positions, during the inclination adjustment and during the transition into the entry position.

5. Vehicle seat according to one of the preceding claims, **characterized in that** the first turning and sliding joint (32) acts as a turning joint during the transition into the entry position.

6. Vehicle seat according to one of the preceding claims, **characterized in that** the first turning and sliding joint (32) is defined by a pin (31) and a slot (30a), in particular in the coupler (30), the slot enclosing the pin (31) with free travel.

7. Vehicle seat according to Claim 6, **characterized in that** the pin (31) is also part of the second locking device (33), and in particular interacts with a pawl (33a) of same.

8. Vehicle seat according to Claim 6 or 7, **characterized in that** the pin (31) is also part of the second turning and sliding joint (42).

9. Vehicle seat according to one of the preceding claims, **characterized in that**, during the transition into the flat floor position, the second locking device (33) is released and the backrest (5) lowers the seat cushion (3) by means of the action of the coupler (30) on the second turning and sliding joint (42).

## Revendications

1. Siège de véhicule, en particulier siège de véhicule automobile, comportant
a) une base (9), qui présente au moins un pied antérieur (11),
b) un coussin de siège (3), qui est en liaison articulée avec le pied antérieur (11) au moyen d'au moins une jambe antérieure (13),
c) au moins un pied postérieur (21), qui est verrouillé avec la base (9) dans au moins une position d'utilisation convenant pour le transport d'une personne, au moyen d'un premier dispositif de verrouillage (23),
d) au moins un bras (27, 29) entre le pied antérieur (11) et le pied postérieur (21),
e) au moins un moyen de couplage entre le coussin de siège (3) et le pied postérieur (21),
f) un dossier (5) supporté par le pied postérieur (21), et
g) au moins une bielle (30) entre le dossier (5) d'une part et ledit au moins un moyen de couplage ou le coussin de siège (3) d'autre part,
dans lequel
h) le siège de véhicule (1) peut être transféré de la position d'utilisation à une position d'accès, lorsque, après déverrouillage du pied postérieur (21), on bascule vers le haut le coussin de siège (3) et on opère un mouvement de déplacement vers l'avant du dossier (5) au moyen du pied postérieur (21) et avec le guidage du bras (27, 29), et dans lequel
i) le siège de véhicule (1) peut être transféré de la position d'utilisation à une position au plancher, lorsque l'on bascule le dossier (5) vers l'avant et on abaisse le coussin de siège (3) au moyen de la bielle (30),
**caractérisé en ce que**
j) la bielle (30) est couplée audit au moins un moyen de couplage ou au coussin de siège (3) au moyen d'un premier joint articulé cylindrique (32),
k) il est prévu un deuxième dispositif de verrouillage (33), qui verrouille ledit au moins un moyen de couplage de façon séparable, et
l) au moins un deuxième joint articulé cylindrique (42) fait office de moyen de couplage.

2. Siège de véhicule selon la revendication 1, **caractérisé en ce que** le dossier (5) peut être réglé quant à son inclinaison par rapport au pied postérieur (21) au moyen d'au moins une charnière (7), définissant ainsi plusieurs positions d'utilisation.

3. Siège de véhicule selon la revendication 2, **caractérisé en ce que** le premier joint articulé cylindrique (32) découple le coussin de siège (3) et le deuxième joint articulé cylindrique (42) de la bielle (30) pendant le réglage de l'inclinaison du dossier (5).

4. Siège de véhicule selon la revendication 2 ou 3, **caractérisé en ce que** le deuxième dispositif de verrouillage (33) verrouille le deuxième joint articulé cylindrique (42) dans les positions d'utilisation, pendant le réglage de l'inclinaison et lors du transfert dans la position d'accès.

5. Siège de véhicule selon l'une quelconque des revendications précédentes, **caractérisé en ce que** le premier joint articulé cylindrique (32) agit comme une articulation à charnière lors du transfert dans la position d'accès.

6. Siège de véhicule selon l'une quelconque des revendications précédentes, **caractérisé en ce que** le premier joint articulé cylindrique (32) est défini par un tourillon (31) et une fente (30a), en particulier dans la bielle (30), qui entoure le tourillon (31) avec une course à vide.

7. Siège de véhicule selon la revendication 6, **caractérisé en ce que** le tourillon (31) fait également partie du deuxième dispositif de verrouillage (33), en particulier coopère avec un cliquet (33a) de celui-ci.

8. Siège de véhicule selon la revendication 6 ou 7, **caractérisé en ce que** le tourillon (31) fait aussi partie du deuxième joint articulé cylindrique (42).

9. Siège de véhicule selon l'une quelconque des revendications précédentes, **caractérisé en ce que**, lors du transfert dans la position au plancher, le deuxième dispositif de verrouillage (33) se déverrouille et le dossier (5) abaisse le coussin de siège (3) au moyen de l'action de la bielle (30) sur le deuxième joint articulé cylindrique (42).
